# EUROPÄISCHE PATENTANMELDUNG

(11) **EP 4 230 175 A1**
(43) Veröffentlichungstag der Anmeldung: **23.08.2023**
(21) Anmeldenummer: 22157153.2
(22) Anmeldetag: 16.02.2022
(51) Int. Cl.: A61C 5/62, B05C 17/005

(54) **DENTALKARTUSCHE, SYSTEM AUS EINER ELEKTROMAGNETISCHEN STRAHLUNGSQUELLE UND EINER DENTALKARTUSCHE, UND VERFAHREN ZUR HERSTELLUNG EINER DENTALKARTUSCHE MITTELS SPRITZGIESSENS**

(71) Anmelder: Ivoclar Vivadent AG, 9494 Schaan (LI)
(72) Erfinder: Die Erfindernennung liegt noch nicht vor
(74) Vertreter: Baldus, Oliver

(57) **Zusammenfassung**

Es ist eine Dentalkartusche (10), mit einem Greifrand (38) und einem Zylinderkörper (12), der einen Zylinderraum (34) aufweist, in welchem Dentalmaterial aufnehmbar ist, und mit einer gegenüber dem Zylinderkörper (12) beweglichen Ausbringdüse (14), vorgesehen. Ferner ist es vorgesehen, dass die Ausbringdüse (14), insbesondere aus einem weicheren Material als der Zylinderkörper (12), und der Zylinderkörper (12) per Montagespritzguss hergestellt sind.

## Beschreibung

Die Erfindung betrifft einer Dentalkartusche, gemäß dem Oberbegriff von Anspruch 1 bzw. 14.

Dentalkartuschen für das Applizieren von den Dentalmaterialien sind seit langem bekannt.

Derartige Kartuschen oder Patronen werden typischerweise mit Dentalmaterial befüllt geliefert und in einen Applikator eingesetzt, um das betreffende Dentalmaterial zu applizieren.

Typischerweise werden Füllungsmaterialien in Kavitäten eingebracht. Diese sind häufig nicht gut im Mund des Patienten zu erreichen, insbesondere, wenn Behandlungen der Molaren durchgeführt werden müssen.

Daher hat man derartige Dentalkartuschen mit einer speziell geformten Ausbringdüse versehen.

Diese erstreckt sich seitlich schräg nach vorne von einem Zylinderkörper der Dentalkartusche weg. Hierdurch lassen sich auch schlechter zugängliche Bereiche der hinteren Molare mit Füllungsmaterialien befüllen.

In manchen Fällen wäre es jedoch günstiger, eine andere Form der Ausbringdüse zu haben, beispielsweise eine gerade verlaufende Ausbringdüse.

Daher ist es vorgeschlagen worden, die Ausbringdüse als separates Spritzgussteil herzustellen, das in dem Zylinderkörper gelagert und gegenüber diesem beweglich ist.

Diese Lösung ist jedoch zum einen schwierig zu fertigen, denn bei der Fertigung muss die Ausbringdüse manuell in den Zylinderkörper eingesetzt werden.

Zum anderen bedarf sie des doppelten Spritzguss-Aufwandes, nachdem zwei Teile separat hergestellt werden müssen und dementsprechend auch zwei Spritzgusswerkzeuge bereitgestellt werden müssen.

Daher ist es nicht verwunderlich, dass diese Lösung sich nicht durchgesetzt hat.

Demgegenüber liegt der Erfindung die Aufgabe zugrunde, eine Dentalkartusche gemäß dem Oberbegriff von Anspruch 1 bzw. 14 zu schaffen, die eine gute Akzeptanz ermöglicht, aber dennoch preisgünstig herzustellen ist, ohne Flexibilität einzubüßen.

Diese Aufgabe wird erfindungsgemäß durch Anspruch 1 bzw. 14 gelöst. Vorteilhafte Weiterbildungen ergeben sich aus den Unteransprüchen.

Erfindungsgemäß ist es so vorgesehen, die Dentalkartusche im Montagespritzguss so herzustellen, dass eine Beweglichkeit zwischen dem Zylinderkörper und der Ausbringdüse hergestellt wird. Dort ist insbesondere ein Gelenk gebildet.

Die Schwenkbarkeit ist durch das Herstellverfahren Montagespritzguss ohne weiteres gegeben. Dieses wird auch als Mehrkomponentenspritzguss bezeichnet.

Bevorzugt wird für die Ausbringdüse ein weicheres Material als für den Zylinderkörper verwendet.

Geeignete Materialpaarungen lassen sich der nachstehenden Tabelle entnehmen.

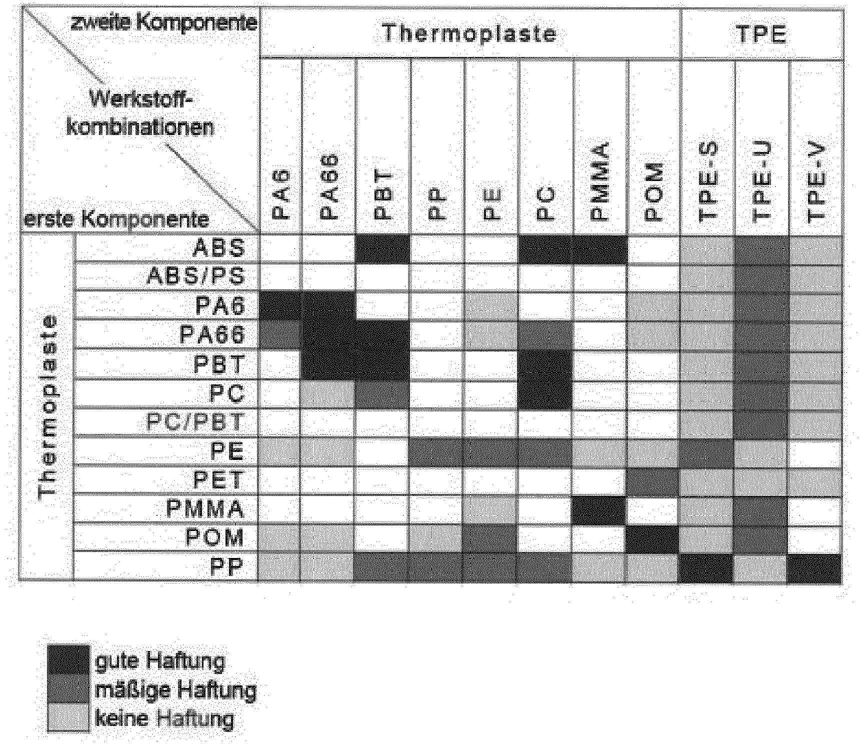

Wenn ein Materialpaar mit "keiner Haftung" verwendet wird, entsteht eine freie Drehbeweglichkeit zwischen dem Zylinderkörper und der Ausbringdüse.

Demgegenüber kann ein Materialpaar mit "mäßiger Haftung" bevorzugt sein, um eine gewisse Haltefunktion zur Ausübung von seitlichem Druck über die Ausbringdüse zu ermöglichen.

Es versteht sich, dass auch die Reibung zwischen dem Zylinderkörper und der Ausbringdüse in geeigneter Weise angepasst werden kann.

Die Haftreibung kann so gewählt werden, dass eine Kraft von beispielsweise 20 N erforderlich ist, um eine Verschwenken zu ermöglichen.

Hierdurch wird ein versehentliches Verschwenken verhindert, und es lässt sich bei Bedarf über die Spitze der Ausbringdüse auch ein Druck in geeigneter Weise erzeugen.

Dennoch ist ein Verschwenken um beispielsweise 45° zur Achse des Zylinderkörpers möglich. Hierdurch lässt sich die Spitze der Ausbringdüse auch in tiefliegende Kavitäten einführen.

Es ist aber auch möglich, ein Gelenk zwischen dem Zylinderkörper und der Ausbringdüse so zu realisieren, dass lediglich ein geringer Schwenkwinkel von beispielsweise 20° möglich ist. In diesem Fall bildet das Gelenk gleichsam einen Schwenkanschlag endseitig des Schwenkbereichs.

Hierdurch ist es ebenfalls möglich, mit der Spitze der Ausbringdüse einen Druck in der Kavität oder auf den Zahn des Patienten an einer geeigneten Stelle auszuüben, wenn dies erwünscht ist.

Besonders günstig ist es, dass unter den vorstehend erwähnten Materialpaarungen auch solche sind, die ohne weiteres biokompatibel sind und für medizinische und damit für zahnmedizinische Zwecke besonders geeignet sind.

In vorteilhafter Ausgestaltung ist es vorgesehen, dass die Ausbringdüse eine Gelenkpfanne ausbildet, die einen Gelenkkopf, der vorne an dem Zylinderkörper geformt ist, umgibt. Insofern ist dort ein Kugelgelenk ausgebildet.

Der Umschlingungswinkel der Gelenkpfanne um den Gelenkkopf beträgt in an sich bekannter Weise mehr als 180 Grad.

Die Ausbringdüse ist mit dem Zylinderkörper formschlüssig verbunden. Dies stellt sicher, dass sie sich nicht versehentlich löst.

Der Umschlingungswinkel kann beispielsweise 210 Grad betragen. Damit ist eine sichere Lagerung gewährleistet. Dennoch ist ein Schwenkwinkel von beispielsweise 45° zur Achse des Zylinderkörpers möglich.

Die Herstellung der erfindungsgemäßen Dentalkartusche kann in beliebiger Weise mittels des Montagespritzguss-Verfahrens erfolgen. So ist es beispielsweise möglich, mittels Zweikomponenten-Montagespritzguss zu arbeiten.

Bei Bedarf ist es aber auch möglich, mehr als zwei Komponenten zu verwenden, beispielsweise wenn farblich abgesetzte Beschriftungen verwendet werden sollen, und die dritte Komponente für die Beschriftung verwendet wird.

In vorteilhafter Ausgestaltung ist es vorgesehen, dass die Ausbringdüse frei von Stoffschluss an dem Zylinderkörper anliegt. Dies gelingt durch eine geeignete Auswahl einer Materialpaarung beim Montagespritzgussverfahren.

Es besteht beim Einsatz der Dentalkartusche aber stets ein Formschluss zwischen der Ausbringdüse und dem Zylinderkörper.

Der Formschluss erlaubt ein Verdrehen der Ausbringdüse gegenüber dem Zylinderkörper.

Es besteht eine Haftreibung zwischen der Ausbringdüse und dem Zylinderkörper, die so groß ist, dass die Ausbringdüse sich gegenüber dem Zylinderkörper nicht versehentlich verdreht.

Die Größe der Haftreibung kann so gewählt sein, dass ein Drehmoment von mehr als 20 Ncm erforderlich ist, um die Haftreibung zu überwinden. Dieser Wert kann aber auch erheblich größer oder kleiner gewählt werden, z.B. zwischen 4 und 100 Ncm.

Die Gleitreibung beträgt etwa die Hälfte der Haftreibung. Dies ermöglicht ein leichtes beabsichtigtes Verdrehen, setzt aber dem unabsichtlichen Verdrehen der Ausbringdüse gegenüber dem Zylinderkörper ein größeres Drehmoment entgegen. Der Gleitreibungskoeffizient kann 0, 3 oder geringer sein, z.B. 0,2 oder 0,05 betragen.

Der Zylinderkörper hat eine Zylinderachse und die Ausbringdüse hat eine Düsenachse. Beide Achsen erstrecken sich entweder koaxial, parallel oder schräg zueinander. Der Winkel der Achsen zueinander ist bevorzugt durch die Wirkung des Kugelgelenks einstellbar.

In vorteilhafter Ausgestaltungen ist das Kugelgelenk zentral an dem Zylinderkörper auf der Zylinderachse angeordnet. Bei dieser Lösung ist eine koaxiale Stellung der Zylinderachse zur Düsenachse möglich.

Der anwendende Zahnarzt kann in beliebiger Weise die Ausbringdüse gegenüber dieser koaxialen Stellung verschwenken, so dass die Ausbringdüse gegenüber dem Zylinderkörper abgekröpft ist.

In vorteilhafter Ausgestaltung ist die Ausbringdüse über das Kugelkopfgelenk unverlierbar auf dem Zylinderkörper gelagert.

In einer modifizierten Ausgestaltung ist die Lagerung beim Einsatz unverlierbar. Bei Bedarf lässt sich die Ausbringdüse jedoch vom Zylinderkörper durch einen größeren Kraftaufwand wie beispielsweise 100 N entfernen. Diese Lösung ermöglicht es, eine Ersatzdüse aufzubringen, wenn die mitgelieferte Düse eingetrocknet ist.

Bevorzugt ist die Ausbringdüse unter Vorspannung und spielfrei gelagert.

Weitere Vorteile, Einzelheiten und Merkmale ergeben sich aus der nachstehenden Beschreibung der Erfindung anhand der Zeichnung.

Es zeigen:
- Fig. 1: einen schematischen Schnitt durch eine Ausführungsform einer erfindungsgemäßen Dentalkartusche; und
- Fig. 2: ein Schnitt durch den vorderen Teil einer weiteren Ausführungsform der erfindungsgemäßen Dentalkartusche.

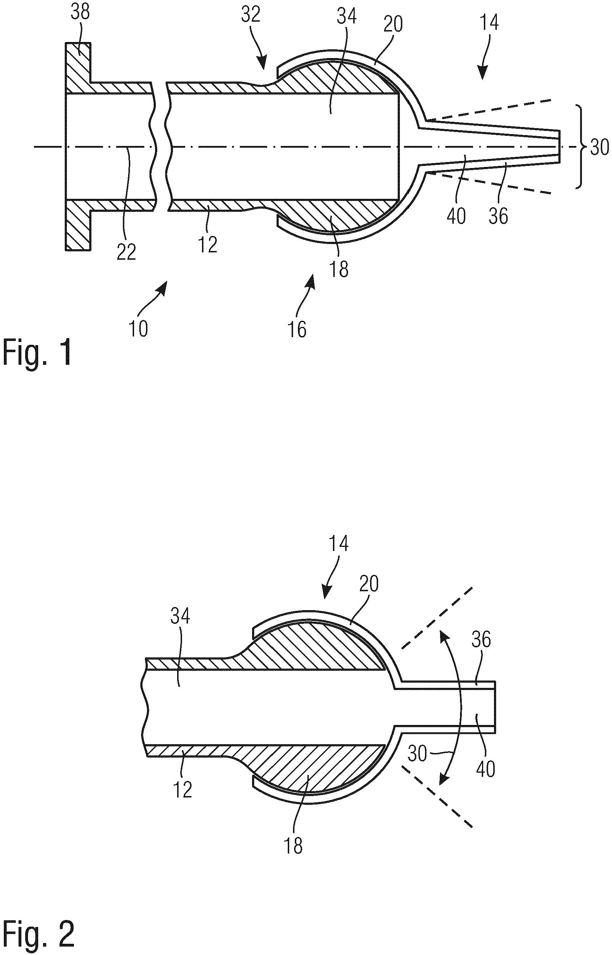

Fig. 1 zeigt eine Dentalkartusche 10, die aus einem Zylinderkörper 12 und einer Ausbringdüse 14 besteht.

Zwischen diesen Teilen ist ein Gelenk 16 ausgebildet, bestehend aus einem Gelenkkopf 18, der an dem Zylinderkörper 12 an dessen vorderem Ende angeformt ist, und einer Gelenkpfanne 20, die am rückwärtigen Ende der Ausbringdüse ausgebildet ist und in an sich bekannter Weise die Gelenkpfanne 18 umgibt.

Die Dentalkartusche 10 ist mittels des an sich bekannten Montagespritzguss-Verfahrens hergestellt. Hierzu wird zunächst eine Spritzgussform für eines der Teile, beispielsweise den Zylinderkörper 12, bereitgestellt.

Im vorderen Bereich der Spritzgussform, welcher Bereich dem Gelenkkopf 18 entspricht, ist die Spritzgussform mit Schiebern oder sonstigen abnehmbaren Elementen ausgerüstet.

Dieser Bereich wird nach dem Spritzguss freigelegt, also entweder werden die Schieber zurückgezogen oder die abnehmbaren Elemente entfernt. Es wird eine weitere Form entsprechend der Form der Ausbringendüse 14 aufgebracht, wobei der Gelenkkopf 18 teils als Innenform dient.

Das Spritzgieß-Material der Ausbringedüse 14 beim Spritzgießen wird anders gewählt als das des Zylinderkörpers 12, entsprechend der eingesetzten Materialpaarung.

Erfindungsgemäß ergibt sich eine Dentalkartusche 10 mit einer Ausbringdüse 14, die gegenüber den Zylinderkörper 12 verschwenkbar ist.

Der Zylinderkörper 12 hat eine Zylinderachse 22 und die Ausbringdüse 14 eine Düsenachse 24. Diese können entsprechend dem Schwenkwinkel eine Schrägstellung zueinander einnehmen.

Der Schwenkbereich 30 der Ausbringdüse 14 gegenüber dem Zylinderkörper 12 lässt sich in weiten Bereichen an die Erfordernisse anpassen. Im dargestellten Ausführungsbeispiel gemäß Fig. 1 ist der Schwenkbereich 30 vergleichsweise gering, bei der Ausführungsform gemäß Fig. 2 jedoch wesentlich größer.

Der Schwenkbereich 30 wird je durch einen Anschlag 32 begrenzt. Der Anschlag 32 ist zwischen dem rückwärtigen Ende der Gelenkpfanne 20 und dem ebenfalls rückwärtigen Ende des Gelenkkopfes 18 festgelegt.

Bei der dargestellten Lösung gemäß den Figuren ist ein weicher Endanschlag 32 vorgesehen, da die Materialien des Zylinderkörpers 12 und der Ausbringdüse 14 sich schräg zueinander erschrecken, wenn die Anschlagstellung erreicht ist.

In einer modifizierten Ausgestaltung ist es vorgesehen, einen harten Anschlag 32 zu realisieren. Dies lässt sich dadurch erreichen, dass beispielsweise an dem Zylinderkörper 12 außen an der entsprechenden Stelle endseitig des Gelenkkopfes 18 ein Absatz ausgebildet ist, auf den dann das Ende der Gelenkpfanne 20 trifft.

Bei der Ausführungsform gemäß Fig. 1 ist ein vergleichsweise großer ZylinderInnenraum 34 realisiert. In dem Zylinder gleitet in an sich bekannter Weise ein nicht dargestellter Kolben. Durch Betätigung des Kolbens über einen auch nicht dargestellten Stempel lässt sich das dort befindliche Material, beispielsweise Dentalmaterial, durch die Ausbringdüse 14 austragen und an der gewünschten Stelle applizieren, beispielsweise im Mund eines Patienten. Hierbei stützen sich die Finger des Zahnarztes in an sich bekannter Weise an einem Greifrand 38 ab.

Dies gilt sinngemäß auch für die Ausführungsform gemäß Fig. 2. Bei dieser Ausführungsform ist der Innenraum 34 kleiner und hat insbesondere einen geringeren Durchmesser. Es versteht sich, das in an sich bekannter Weise der Kolbendurchmesser an den Innendurchmesser des Innenraums 34 angepasst ist, so dass der Kolben abdichtet.

Die Form der Ausbringdüse 14 kann ebenfalls in weiten Bereichen an die Erfordernisse angepasst werden. Bei der Ausführungsform gemäß Fig. 1 ist eine Auslasstülle 36 der Ausbringdüse 14 leicht konisch spitz zulaufend.

Demgegenüber ist die Auslasstülle 36 bei der Ausführungsform gemäß Fig. 2 zylindrisch. Ferner bildet die Auslasstülle 36 je einen Auslasskanal 40. Der maximale Schwenkbereich 30 ist bei der Ausführungsform gemäß Fig. 2 so gross gewählt, dass ein Versperren des Auslasskanals 40 gegen den Innenraum 34 möglich ist.

Auch das Innendurchmesser-Verhältnis von Innenraum 34 und Auslasstülle 36 lässt sich in weiten Bereichen an die Erfordernisse anpassen. Wenn das Verhältnis vergleichsweise großeist, wird der Ausström-Widerstand größerm so dass ein größerer Druck auf den Stempel des Kolbens für das Applizieren des Dentalmaterials ausgeübt wird, um ein Ausströmen des Dentalmaterials zu erreichen.

## Patentansprüche

1. Dentalkartusche, mit einem Zylinderkörper, der einen Zylinderraum aufweist, in welchem Dentalmaterial aufnehmbar ist, mit einem in dem Zylinderraum geführten Kolben, und mit einer Ausbringdüse für das Ausbringen des Dentalmaterials, **dadurch gekennzeichnet, dass** der Zylinderkörper (12) und/oder die Ausbringdüse (14) eingelagerte elektrisch leitfähige und induktiv erwärmbare Partikel, insbesondere Metallpartikel, aufweist.

2. Dentalkartusche nach Anspruch 1, **dadurch gekennzeichnet, dass** der Ausbringdüse (14) und/oder der Zylinderkörper (12) mit in diesen aufgenommenem Dentalmaterial in Wärmeleitverbindung steht, mittels welcher das Dentalmaterial über die induktive Erwärmung der Partikel in der Ausbringdüse (14) und/oder dem Zylinderkörper (12) erwärmbar ist.

3. Dentalkartusche nach Anspruch 1 oder 2, **dadurch gekennzeichnet, dass** die Ausbringdüse (14) und/oder der Zylinderkörper (12) Kunststoff aufweisen, in den die Partikel eingelagert sind, insbesondere Polyamid oder PBT.

4. Dentalkartusche nach Anspruch 1, 2 oder 3, **dadurch gekennzeichnet, dass** die Dentalkartusche (10) in einem Spritzguss-Verfahren hergestellt ist und dass die Partikel in der spritzzugiessenden Masse eingemischt sind.

5. Dentalkartusche nach einem der vorhergehenden Ansprüche , **dadurch gekennzeichnet, dass** die Partikel in dem Zylinderkörpers (12) und/oder der Ausbringdüse (14) gleichmäßig verteilt oder im wesentlichen gleichmäßig verteilt vorliegen.

6. Dentalkartusche nach einem der vorhergehenden Ansprüche, **dadurch gekennzeichnet, dass** die Ausbringdüse (14) und/oder der Zylinderkörper (12) eine Innenfläche aufweist, die in Kontakt mit dem Dentalmaterial steht oder beim Ausbringen gelangt, und dass die Partikel in dem Zylinderkörper (12) und/oder der Ausbringdüse (14) verteilt vorliegen, jedoch abgesehen von der Innenfläche.

7. Dentalkartusche nach einem der Ansprüche 1 bis 4 oder 6, **dadurch gekennzeichnet, dass** die Partikel mit einem Häufigkeitsgradienten in der Ausbringdüse (14) und/oder dem Zylinderkörper (12) verteilt sind.

8. Dentalkartusche nach Anspruch 7, **dadurch gekennzeichnet, dass** die Partikelhäufigkeit von außen nach innen in der Ausbringdüse (14) und/oder dem Zylinderkörper (12) zunimmt.

9. Dentalkartusche nach einem der Ansprüche 7 oder 8, **dadurch gekennzeichnet, dass** Ausbringdüse (14) ein Austrittsende aufweist, über das das Dentalmaterial beim Ausbringen die Dentalkartusche verlässt, und dass die Partikelhäufigkeit in der Ausbringdüse (14) und/oder dem Zylinderkörper (12) in der Richtung zum Austrittsende hin zunimmt.

10. Dentalkartusche nach einem der vorhergehenden Ansprüche , **dadurch gekennzeichnet, dass** die Partikel eine Größe zwischen 2µm und 100 µm aufweisen, insbesondere zwischen 10µm und 30µm.

11. Dentalkartusche nach einem der vorhergehenden Ansprüche, **dadurch gekennzeichnet, dass** die Partikel eine von der Kugelform abweichende Form aufweisen, insbesondere eine Form mit einer Länge, die das eineinhalbfache der Dicke oder mehr beträgt, besonders bevorzugt mindestens das Dreifache.

12. Dentalkartusche nach einem der vorhergehenden Ansprüche, **dadurch gekennzeichnet, dass** der in den Zylinderraum hineinragende Kolben leitfähige Partikel aufweist.

13. System aus einer elektromagnetischen Strahlungsquelle und einer Dentalkartusche, **dadurch gekennzeichnet, dass** an der Strahlungsquelle oder in dem von ihr abgegebenen Feld elektromagnetischer Strahlung eine Ablage für die Dentalkartusche angeordnet ist, und dass eine Ausbringdüse (14) und/oder ein Zylinderkörper (12) der Dentalkartusche elektrisch leitfähige Partikel aufweist, dass der Ausbringdüse (14) und/oder der Zylinderkörper (12) mit in diesen aufgenommenem Dentalmaterial in Wärmeleitverbindung steht, mit welcher elektromagnetischen Strahlungsquelle insbesondere das Dentalmaterial über die Ausbringdüse (14) und/oder der Zylinderkörper (12) erwärmbar ist.

14. Verfahren zur Herstellung einer Dentalkartusche mittels Spritzgießens, **dadurch gekennzeichnet, dass** ein für den Spritzguss bestimmter Kunststoff, der insbesondere in Granulatform vorliegt, vor dem Spritzgießen mit einem Pulver aus elektrisch leitfähigen Partikeln, insbesondere Metallpartikeln oder Graphitpartikeln versetzt wird, gemischt wird und dann in eine Spritzgussform eingebracht wird.
